# EUROPÄISCHE PATENTSCHRIFT

(11) **EP 2 079 944 B1**
(45) Veröffentlichungstag und Bekanntmachung des Hinweises auf die Patenterteilung: **01.04.2020**
(21) Anmeldenummer: 07821185.1
(22) Anmeldetag: 11.10.2007
(51) Int. Cl.: F16H 61/30, F16H 63/30

(54) **VORRICHTUNG ZUM BETÄTIGEN EINES ALS LOSRAD AUSGEFÜHRTEN ZAHNRADES EINER GETRIEBEEINRICHTUNG**
DEVICE FOR ACTUATING A GEARWHEEL, WHICH IS DESIGNED AS A LOOSE WHEEL, OF A TRANSMISSION DEVICE
DISPOSITIF D'ACTIONNEMENT D'UNE ROUE DENTÉE RÉALISÉE COMME UNE ROUE LIBRE D'UN DISPOSITIF DE TRANSMISSION

(30) Priorität: 19.10.2006 DE 102006049281
(43) Veröffentlichungstag der Anmeldung: 22.07.2009
(73) Patentinhaber: ZF Friedrichshafen AG, 88046 Friedrichshafen (DE)
(72) Erfinder: MOHR, Mark, 88069 Tettnang (DE); REISCH, Matthias, 88214 Ravensburg (DE)
(86) Internationale Anmeldenummer: PCT/EP2007/060818
(87) Internationale Veröffentlichungsnummer: WO 2008/046776

(56) Entgegenhaltungen:
- DE-A1- 3 711 490
- US-A- 1 731 076

## Beschreibung

Die Erfindung betrifft eine Vorrichtung zum Betätigen eines als Losrad ausgeführten Zahnrades einer Getriebeeinrichtung gemäß der im Oberbegriff des Patentanspruches 1 näher definierten Art.

Aus der Praxis bekannte Vorgelegegetriebe, wie Doppelkupplungsgetriebe, automatisierte Schaltgetriebe, Handschaltgetriebe oder dergleichen, sind üblicherweise mit auf einer Welle drehbar gelagerten Zahnrädern ausgeführt, welche mit einer weiteren Welle drehfest verbunden Zahnrädern in Eingriff stehen und so genannte Zahnradpaarungen ausbilden. Durch wechselweises drehfestes Verbinden der drehbar auf der Welle gelagerten Zahnräder sind die Zahnradpaarungen zur Darstellung unterschiedlicher Gangstufen eines Vorgelegegetriebes in den Kraftfluss eines Vorgelegegetriebes über entsprechende Schaltelemente, wie Synchronisierungen, Klauen oder Reibelemente, zuschaltbar.

Die Betätigung der zum Zuschalten der Zahnradpaarungen vorgesehenen Schaltelemente erfolgt dabei in Bezug auf die Welle, auf welcher die drehbar gelagerten Zahnräder bzw. Losräder eines Vorgelegegetriebes angeordnet sind, mechanisch, hydraulisch, pneumatisch oder magnetisch von außen oder von innen.

Aus der DE 43 25 964 A1 ist es bekannt, auf einer Welle drehbar ausgeführte Zahnräder über eine hydraulisch betätigbare Schaltmuffe drehfest mit der Welle zu verbinden. Dabei wird die Schaltmuffe über durch die Getriebewelle verlaufende Hydraulikleitungen mit Druckmittel versorgt.

Die hydraulische Betätigung der zum Festsetzen der als Losräder ausgeführten Zahnräder vorgesehenen Schaltmuffe erfordert in axialer Erstreckung der Welle Bauraum zwischen auf der Welle angeordneten und zu betätigenden Zahnrädern, wodurch eine durch eine Betätigung aus dem Inneren einer Getriebewelle heraus angestrebte Bauraumbedarfsreduzierung nicht in erwünschtem Umfang erzielt wird.

Zusätzlich ist ein der Schaltmuffe zugeordneter Kolbenraum gegenüber seiner Umgebung nachteilhafterweise über so genannte berührende Dichteinrichtungen abgedichtet, so dass während der Bewegung des Kolbens gegenüber dem Zylinder aufgrund der teilweise hohen Betätigungsdrücke unerwünscht hohe Reibkräfte auftreten. Diese Reibkräfte führen wiederum zu einer Erhöhung der Betätigungskräfte, welche zum Betätigen des Kolbens aufzubringen sind. Zusätzlich nimmt die Dichtwirkung einer berührenden Dichtung aufgrund der Reibung mit zunehmender Betriebsdauer ab, wodurch die Funktionsweise einer solchen Ansteuerung unter Umständen beeinträchtigt wird. Darüber hinaus treten im Bereich der zwischen einem Gehäuse und der Getriebewelle vorgesehenen Drehölzuführungen weitere Reibungsverluste auf, welche jedoch aus vorgenannten Gründen unerwünscht sind.

Aus der DE 102 06 584 A1 sind zum drehfesten Verbinden von drehbar auf einer Welle angeordneten Zahnrädern mit der Welle hydraulisch betätigbare Schaltelemente bekannt. Die Schaltelemente werden über zwei in der Welle liegende und mit der Welle drehfest verbundene hydraulische Aktoren betätigt, wobei die beiden Aktoren von einer nicht rotierenden Ölzuführeinheit versorgt werden.

Nachteilhafterweise ist die Abdichtung und Lagerung einer solchen Ölzuführeinheit gegenüber der Umgebung sehr aufwändig und die Ölzuführeinheit ist in Bezug auf die Welle koaxial zu dieser anzuordnen. Sind mehrere Aktoren in der Welle angeordnet und hydraulisch zu betätigen, ist in der Welle ein komplexes Ölzu- und -abführsystem vorzusehen.

Eine weitere aus der DE 102 06 584 A1 bekannte Ausführung umfasst zwei Aktoren, die im Betrieb eines Getriebes eine mit der Welle mitdrehende Verbindungsstange aufweisen, deren Drehzahl zu einem drehfesten Gehäuse entkoppelt wird. Zur Betätigung der als Losräder ausgeführten Zahnräder werden sowohl elektromagnetische als auch hydraulische Aktoren vorgeschlagen, bei welchen jeweils ein Schaltelement über eine Verbindungsstange mit einem Aktor verbunden ist und mit der Wellendrehzahl rotiert, während ein Zylindergehäuse einer Kolben-Zylinder-Einheit in Bezug auf die Welle und die Verbindungsstange stillsteht.

Aufgrund der im Betrieb einer Getriebeeinrichtung auftretenden hohen rotatorischen Relativgeschwindigkeiten zwischen einem mit der Verbindungsstange verbundenen Kolben und dem Zylindergehäuse ist entweder eine aufwändige, reibungs- und verschleißbehaftete Abdichtung des von dem Kolben und dem Zylindergehäuse begrenzten Kolbenraumes erforderlich oder der Kolbenraum ist durch hohe Leckageströme, die große Druck- und Ölverluste verursachen, gekennzeichnet.

Aus der DE 102 25 331 A1 ist ein Lastschaltgetriebe mit Zentralsynchronisierung bekannt, bei welchem Losräder mit einer Getriebewelle über einen wenigstens teilweise in der Getriebewelle angeordneten und hydraulisch betätigbaren hydraulischen Aktor ansteuerbar sind. Bei diesem Aktor ist eine mit einem Kolben verbundene Verbindungsstange drehfest mit der Welle verbunden, während ein Zylindergehäuse des als Kolben-Zylinder-Einheit ausgeführten Aktors gehäusefest ausgebildet ist.

Nachteilig dabei ist jedoch, dass die Drehzahlauskopplung zwischen der Verbindungsstange und dem Zylindergehäuse über eine entsprechende Verbindung zwischen einem Kolben und der Verbindungsstange beispielsweise eine Gleit- oder Wälzlagerung realisiert ist und eine für die Funktionsweise erforderliche Abdichtung zwischen den durch den Kolben voneinander getrennten Kolbenräumen mit nur erheblichem Aufwand erreicht wird.

Aus der DE 37 11 490 A1, welche den Oberbegriff des Anspruch 1 offenbart, und der US-A-1 737 076 ist jeweils eine Vorrichtung zum Betätigen wenigstens eines als Losrad ausgeführten Zahnrades einer Getriebeeinrichtung bekannt. Das Zahnrad ist auf einer Welle drehbar gelagert und über wenigstens eine einen wenigstens teilweise im Inneren der Welle angeordneten und über ein fluidisches Druckmittel betreibbaren Aktor aufweisende Zuschalteinrichtung in einen zugeschalteten Zustand überführbar, zu dem das Zahnrad mit der Welle drehfest verbunden ist. Des Weiteren ist das Zahnrad aus dem Inneren der Welle heraus mit der zum Zu- oder Abschalten erforderlichen Betätigungskraft beaufschlagbar. Der wenigstens eine Aktor ist als eine Kolben-Zylinder-Einheit ausgebildet, die vollständig in der Welle angeordnet und drehfest mit dieser verbunden ist.

Der vorliegenden Erfindung liegt die Aufgabe zugrunde, eine Vorrichtung zum Betätigen eines als Losrad ausgeführten Zahnrades einer Getriebeeinrichtung zur Verfügung zu stellen, die durch einen geringen Bauraumbedarf gekennzeichnet ist und deren Funktionsweise mit niedrigem Dichtaufwand bei gleichzeitig geringen Reibkräften gewährleistet ist.

Erfindungsgemäß wird diese Aufgabe mit einer Vorrichtung gemäß den Merkmalen des Patentanspruches 1 gelöst.

Bei der erfindungsgemäßen Vorrichtung zum Betätigen eines als Losrad ausgeführten Zahnrades einer Getriebeeinrichtung, wobei das Zahnrad auf einer Welle drehbar gelagert und über wenigstens eine einen wenigstens teilweise im Inneren der Welle angeordneten und über ein fluidisches Druckmittel betreibbaren Aktor aufweisende Zuschalteinrichtung in einen zugeschalteten Zustand überführbar ist, zu dem das Zahnrad mit der Welle drehfest verbunden ist und wobei das Zahnrad aus dem Inneren der Welle heraus mit der zum Zu-oder Abschalten erforderlichen Betätigungskraft beaufschlagbar ist, ist der wenigstens eine Aktor als ein pneumatischer oder hydraulischer Motor ausgebildet, der mit der Welle drehfest verbunden ist, wobei die Wirkverbindung zwischen einer Motorausgangswelle des Motors und des zu betätigenden Zahnrades mit einer Drehzahlabkopplung zwischen der Motorausgangswelle und der Welle ausgeführt ist.

Damit ist der Aktor der Vorrichtung zum Betätigen eines als Losrad ausgeführten Zahnrades einer Getriebeeinrichtung gemäß Patentanspruch 1 bauraumgünstig in der Welle angeordnet, womit eine Getriebeeinrichtung im Vergleich zu herkömmlichen Getriebeeinrichtungen mit geringeren Bauraumabmessungen ausführbar ist.

Darüber hinaus ist die nicht erfindungsgemäße Ausführungsform der Vorrichtung durch einen geringen Dichtaufwand gekennzeichnet, da eine Drehzahlabkopplung zwischen dem Aktor und den zum Betätigen des Zahnrades vorgesehenen Bauteilen aus den mit Druckmittel beaufschlagten Bereichen des Aktors in einen im Wesentlichen druckfreien Bereich verlegt ist. Damit wird auf einfache Art und Weise erreicht, dass Betätigungskräfte zum Zu- oder Abschalten eines Zahnrades durch berührende Dichtungen verursachte Reibungskräfte nicht in unerwünschtem Umfang erhöht sind.

Die erfindungsgemäße Vorrichtung zum Betätigen eines als Losrad ausgeführten Zahnrades einer Getriebeeinrichtung gemäß dem Oberbegriff des Patentanspruches 1 ist ebenfalls durch einen geringen Bauraumbedarf gekennzeichnet, da der gegenüber der Welle drehfest ausgeführte und vorzugsweise als pneumatischer oder hydraulischer Motor ausgeführte Aktor vollständig in der Welle angeordnet ist.

Zusätzlich ist die erfindungsgemäße Ausführung der Vorrichtung gemäß Patentanspruch 1, bei der der Motor gehäusefest bzw. drehfest gegenüber der Welle ausgebildet ist, in der selben Art und Weise wie die Ausführung der nicht erfindungsgemäßen Vorrichtung im Bereich der Wirkverbindung zwischen einer Motorausgangswelle des Motors und des zu betätigenden Zahnrades bzw. zwischen der Motorausgangswelle und der Welle in einem druckfesten Bereich mit einer Drehzahlabkopplung ausgeführt, womit ein Dichtaufwand im Vergleich zu aus dem Stand der Technik bekannten Lösungen reduziert und das Zahnrad mit möglichst geringen Betätigungskräften von einem zu- oder abgeschalteten Zustand in einen ab- oder zugeschalteten Zustand überführbar ist.

Eine weitere alternative und ebenfalls bauraumgünstige Ausführungsform stellt nicht erfindungsgemäße Vorrichtung zum Betätigen eines als Losrad ausgeführten Zahnrades einer Getriebeeinrichtung dar, bei der ein als eine Kolben-Zylinder-Einheit ausgebildeter Aktor in der Welle angeordnet ist, der gegenüber der Welle drehfest bzw. gehäusefest ausgeführt ist.

Bei der letztgenannten alternativen Ausführungsform der erfindungsgemäßen Vorrichtung ist im Bereich der Wirkverbindung zwischen einer Kolben-stange der Kolben-Zylinder-Einheit und dem zu betätigenden Zahnrad eine Drehzahlabkopplung zwischen der Kolbenstange und der Welle vorgesehen, womit sowohl ein Dichtaufwand als auch Betätigungskräfte zum Zu- oder Abschalten des Zahnrades möglichst gering sind.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau-und funktionsgleiche Bauteile dieselben Bezugszeichen verwendet werden.

Es zeigt:
- Fig. 1: eine schematisierte Teillängsschnittansicht einer Getriebeeinrichtung, welche mit einer ersten Ausführungsform der erfindungsgemäßen Vorrichtung ausgebildet ist;
- Fig. 2: eine Fig. 1 entsprechende Darstellung einer Getriebeeinrichtung, welche mit einer zweiten Ausführungsform nicht erfindungsgemäßen Vorrichtung ausgebildet ist;
- Fig. 3: eine Fig. 2 entsprechende Darstellung, wobei die Getriebeeinrichtung mit einer dritten Ausführungsform nicht erfindungsgemäßen Vorrichtung ausgeführt ist; und
- Fig. 4: eine Fig. 2 entsprchende Darstellung einer Getriebeeinrichtung, welche mit einer vierten Ausführungsform nicht erfindungsgemäßen Vorrichtung ausgebildet ist.

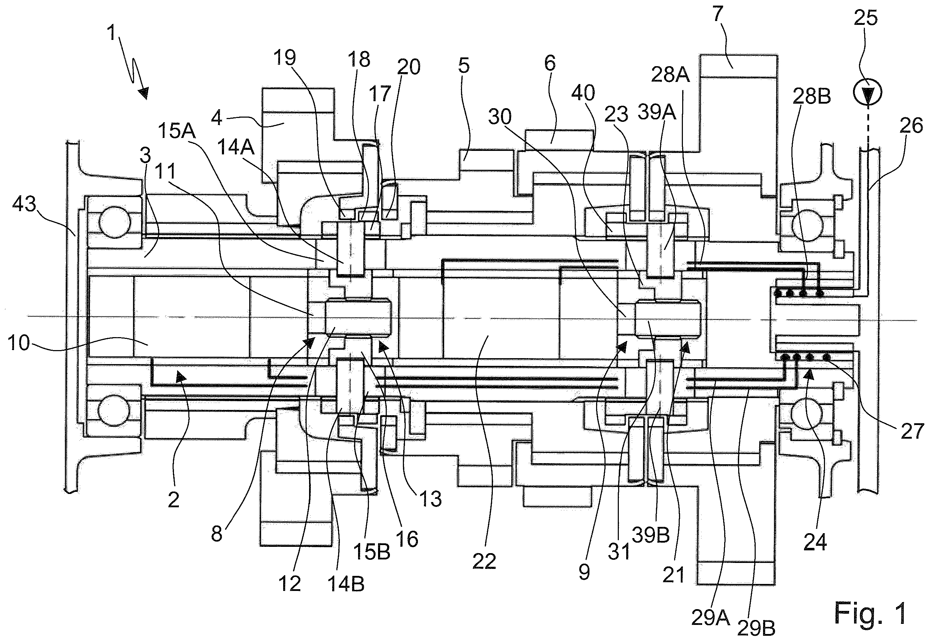

Fig. 1 zeigt eine schematisierte Teillängsschnittansicht einer als Vorgelegegetriebe ausgeführten Getriebeeinrichtung 1, welche eine Vorrichtung 2 zum drehfesten Verbinden einer als Vorgelegewelle ausgebildeten Welle 3 mit mehreren drehbar auf der Welle 2 gelagerten und als Losräder ausgeführten Zahnrädern 4, 5, 6 und 7 aufweist.

Hiervon abweichend ist die Vorrichtung 2 auch in anderen Getriebeeinrichtungen, wie automatisierten Schaltgetrieben, Doppelkupplungsgetrieben oder Planetengetrieben, für eine automatisierte Betätigung einer Getriebeeinrichtung während Schaltvorgängen und dergleichen einsetzbar.

Parallel zu der Welle 3 ist eine nicht näher dargestellte Getriebehauptwelle vorgesehen, auf welcher mehrere als Festräder ausgeführte Zahnräder angeordnet sind, wobei jeweils eines der Festräder mit einem der Zahnräder 4 bis 7 kämmt.

Die Losräder 4 und 5 sowie die Losräder 6 und 7 sind über Zuschalteinrichtungen 8 und 9 der Vorrichtung 2 wechselweise dahingehend betätigbar, dass die Losräder 4 und 5 bzw. 6 und 7 aus einem auf der Welle 3 drehbaren Zustand in einen gegenüber der Welle 3 drehfesten Zustand oder aus einem drehfesten Zustand in einen gegenüber der Welle 3 drehbaren Zustand überführbar sind, um ein an der Welle 3 anliegendes Drehmoment über eines der Zahnräder 4 bis 7 und ein jeweils mit den Zahnrädern 4 bis 7 kämmendes Festrad in die Getriebehauptwelle einleiten zu können.

Die Zuschalteinrichtungen 8, 9 der Vorrichtung 2 weisen grundsätzlich den gleichen konstruktiven Aufbau auf, weshalb in der nachfolgenden Beschreibung im Wesentlichen auf die Zuschalteinrichtung 8 eingegangen wird.

Die Zuschalteinrichtung 8 weist einen Aktor 10 auf, welcher vorliegend als ein hydraulischer Schwenkmotor ausgebildet ist und drehfest mit der Welle 3 verbunden ist. Im Betrieb der Getriebeeinrichtung 1 rotiert der Aktor 10 mit der Drehzahl der Welle 3. Eine Motorausgangswelle 11 des Aktors 10 ist mit einer Spindel 12 einer Spindel-Mutter-Anordnung 13 der Zuschalteinrichtung 8 drehfest verbunden, so dass bei einem aktorseitigen Antrieb der Spindel 12 diese in Rotation versetzt wird und eine in Eingriff mit der Spindel 12 stehende Mutter 16, welche mit der Welle 3 drehfest verbunden ist, in axialer Erstreckung der Welle 3 von dem Aktor 10 weg oder auf diesen zu bewegt wird.

Die Mutter 16 ist vorliegend mit zwei die Welle 3 durchgreifenden Bolzen 14A und 14B derart wirkverbunden, dass die Bolzen 14A und 14B von der Mutter 16 in Langlöchern 15A, 15B der Welle 3 in axialer Richtung der Welle 3 verschoben werden. Die Bolzen 14A und 14B rotieren ebenso wie die Mutter 16 der Spindel-Mutter-Anordnung 13 im Betrieb der Getriebeeinrichtung 1 mit der Drehzahl der Welle 3 um die Rotationsachse der Welle 3.

Um das Zahnrad 4 oder Zahnrad 5 mit der Welle 3 drehfest verbinden zu können und somit aus einem abgeschalteten in einen zugeschalteten Zustand zu überführen, sind die Bolzen 14A und 14B an ihrem der Mutter 16 abgewandten Ende mit einem die Welle 3 umgebenden Hülsenelement 17 verbunden, dass über eine formschlüssige Verbindung mit der Welle 3 drehfest verbunden ist und in axialer Richtung der Welle 3 auf dieser verschiebbar angeordnet ist. Zudem ist das Hülsenelement 17 im Bereich seiner der Welle 3 abgewandten Umfangsfläche mit einem Zahnprofil 18 ausgebildet, welches in Abhängigkeit einer axialen Position mit einem mit dem Losrad 4 fest verbundenen Zahnprofil 19, einem mit dem Losrad 5 fest verbundenen Zahnprofil 20 oder in einer in Fig. 1 näher dargestellten neutralen Zwischenstellung zwischen diesen beiden Zahnprofilen 19 und 20 mit keinem der Zahnprofile 19 und 20 in Eingriff steht und weder das Losrad 4 noch das Losrad 5 drehfest mit der Welle 3 verbunden ist.

Die Spindel-Mutter-Anordnung 13 und eine Spindel-Mutter-Anordnung 21 der Zuschalteinrichtung 9 stellen jeweils eine Antriebswandlereinrichtung dar, mittels welcher ein rotatorischer Antrieb des Aktors 10 sowie eines ebenfalls als elektrischer Motor ausgeführten Aktors 22 der Vorrichtung 2 in eine translatorische Antriebsbewegung zum Zu- oder Abschalten der Losräder 4 bis 7 umwandelbar ist.

Um ein selbsttätiges Zu- oder Abschalten der Losräder 4 bis 7 zu vermeiden, sind die Spindel-Mutter-Anordnungen 13 und 21 vorliegend selbsthemmend ausgeführt, so dass die Mutter 16 der Spindel-Mutter-Anordnung 13 bzw. eine Mutter 23 der Spindel-Mutter-Anordnung 21 ohne aktorseitige Betätigung ihre Position halten.

Alternativ hierzu ist es bei weiteren in der Zeichnung nicht näher dargestellten Ausführungsformen der Getriebevorrichtung vorgesehen, dass ein Schaltzustand eines Schaltelementes, d. h. vorliegend den Hülsenelementen 11 und 40, durch eine entsprechende Ansteuerung der Aktoren der Zuschalteinrichtungen mittels eines aktorseitig erzeugten Rastmomentes haltbar ist.

Die Aktoren 10 und 22 werden zum Betätigen der Losräder 4 bis 7 über einen hydraulischen Drehübertrager 24 mit dem erforderlichen hydraulischen Druck von einer hydraulischen Pumpe 25 versorgt. Der Drehübertrager 24 ist vorliegend über eine hydraulische Leitung 26 mit der Pumpe 25 verbunden und zusätzlich mit Regelventilen 27 ausgebildet, welche Verbindungsleitungen 28A und 28B bzw. 29A und 29B zwischen dem Drehübertrager 24 und dem Aktor 10 bzw. dem Aktor 22 freigeben oder sperren, um die Aktoren 10 und 22 in dem für die Betätigung der Losräder 4 bis 7 erforderlichen Umfang mit Druckmittel zu beaufschlagen.

Die Hydraulikpumpe, welche sowohl außerhalb als auch innerhalb der Welle anordenbar ist, ist in Abhängigkeit des jeweils vorliegenden Anwendungsfalles mechanisch, elektrisch, magnetisch oder hydraulisch antreibbar ausgeführt.

Durch die Integration der Regelventile 27 in die Welle 3 zwischen der Pumpe 25 sind weniger Drehölzuführungen notwendig, wodurch die Vorrichtung 2 konstruktiv einfach und kostengünstig ausgeführt ist.

Aufgrund der als mitrotierende Hydraulikmotoren ausgeführten Aktoren 10 und 22, welche grundsätzlich eine höhere Leistungsdichte als Elektromotoren aufweisen, ist die Vorrichtung 2 durch eine kompakte und leichte Bauweise gekennzeichnet. Dabei wird die Kenntnis genutzt, dass mit einem Hydromotor große Flächen zur Verfügung stellbar sind, auf welche der von der Pumpe 25 zur Verfügung gestellte Druck wirkt. Zusätzlich besteht aufgrund der Übersetzung in der Spindel die Möglichkeit, einen niedrigeren Druck bei erhöhtem Volumenstrom zum Betätigen des Motors zu verwenden.

Die als Schwenkmotoren ausgeführten Aktoren 10 und 22 verrasten vorliegend in der in Fig. 1 dargestellten neutralen Schaltstellung des Hülsenelementes 17 äquivalenten Mittellage, um die Selbsthemmung der Spindel-Mutter-Anordnung 13 zu unterstützen und ein selbsttätiges Zuschalten der Losräder 4 und 5 sicher vermeiden zu können.

Hiervon abweichend besteht auch die Möglichkeit, die hydraulischen Schwenkmotoren bzw. die Aktoren 10 und 22 derart auszuführen, dass diese in verschiedenen Stellungen verrasten und ein zugeschaltetes Losrad 4 oder 5 ohne weitere Druckbeaufschlagung von der Pumpe 25 in zugeschaltetem Zustand haltbar ist.

Bei der in Fig. 1 dargestellten Ausführungsform der erfindungsgemäßen Vorrichtung 2 ist eine Drehzahlabkopplung zwischen der Motorausgangswelle des Aktors 10 bzw. einer Motorausgangswelle 30 des Aktors 22 jeweils im Bereich zwischen der Spindel 12 bzw. einer Spindel 31 der Spindel-Mutter-Anordnung 21 und der Mutter 16 bzw. der Mutter 23, d. h. außerhalb eines druckbeaufschlagten Bereiches der Vorrichtung 2 vorgesehen, womit aufwendige Dichtmaßnahmen, wie sie aus dem Stand der Technik bekannt sind, auf einfache Art und Weise vermieden sind.

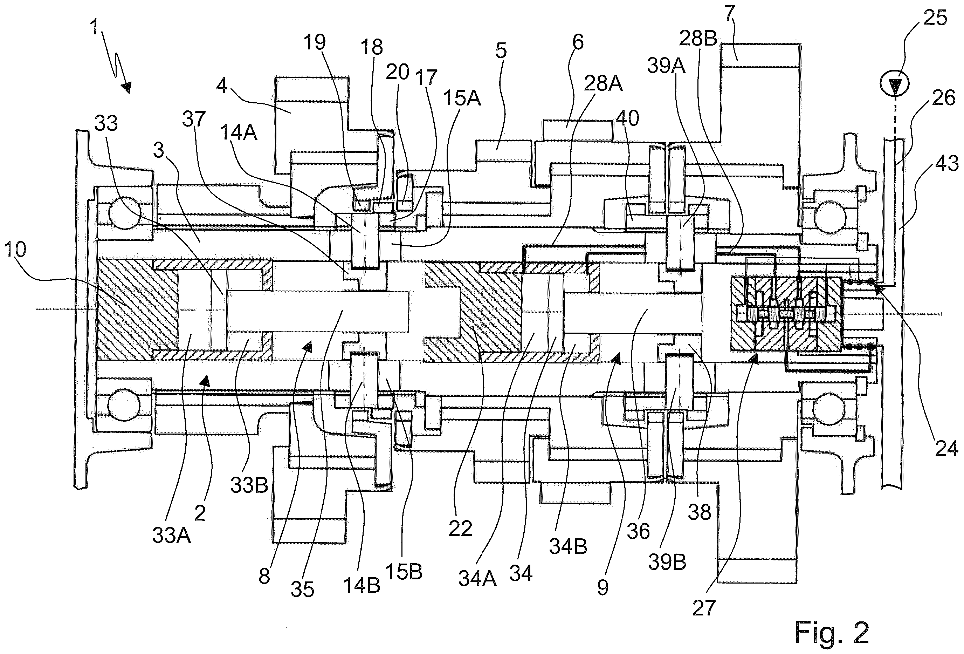

Fig. 2 zeigt eine weitere Ausführungsform nicht erfindungsgemäßen Vorrichtung 2, welche sich von der in Fig. 1 gezeigten Ausführungsform der Vorrichtung 2 sowohl im Bereich der Aktoren 10 und 22 als auch der Zuschalteinrichtungen 8 und 9 unterscheidet. Bei der in Fig. 2 dargestellten Ausführungsform der Vorrichtung 2 sind die Aktoren 10 und 22 als Kolben-ZylinderEinheiten ausgeführt, welche vollständig im Inneren der Welle 3 positioniert und drehfest mit dieser verbunden sind. Kolben 33 und 34 der Aktoren 10 und 22 trennen mit den Verbindungsleitungen 28A, 28B sowie 29A und 29B verbundene Kolbenräume 33A und 33B bzw. 34B und sind mit Kolbenstangen 35, 36 fest verbunden.

Die Kolbenstangen 35 und 36 sind jeweils mit Betätigungselementen 37 bzw. 38 fest verbunden, in welche die Bolzen 14A, 14B bzw. 39A, 39B der Zuschalteinrichtungen 8 und 9 eingreifen um das Hülsenelement 17 bzw. das Hülsenelement 40 in der vorbeschriebenen Art und Weise in axialer Erstreckung der Welle 3 zum Zu- oder Abschalten der Losräder 4 bis 7 entsprechend betätigen zu können.

Bezüglich der weiteren Funktionalitäten der Vorrichtung 2 gemäß Fig. 2 wird auf die Beschreibung der Vorrichtung 2 zu Fig. 1 verwiesen, der grundsätzlich die gleiche Funktionalität zu Grunde liegt.

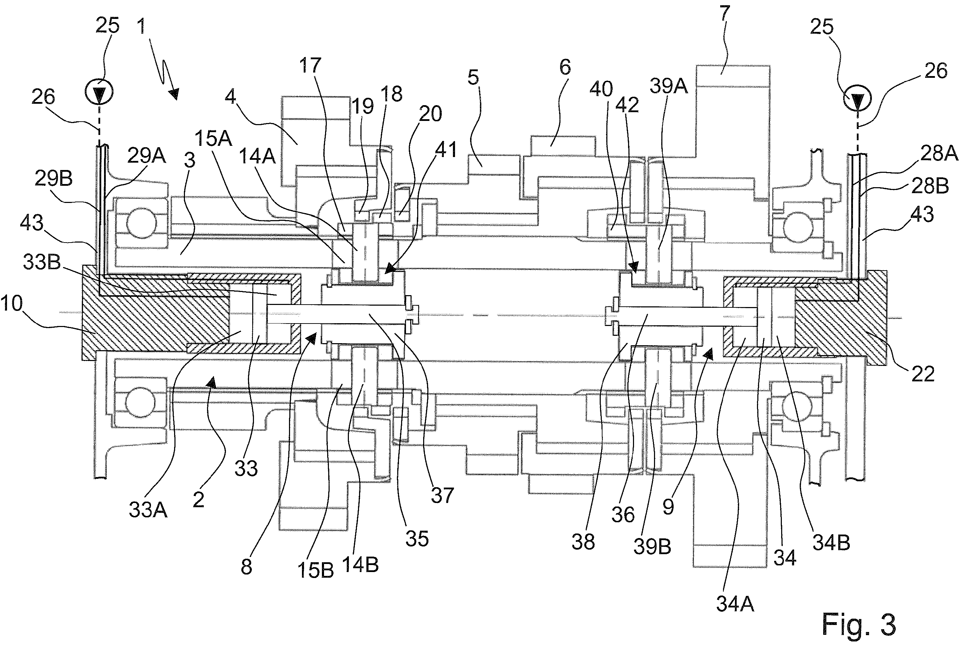

Fig. 3 stellt eine zu Fig. 2 äquivalente Ausführungsform der Vorrichtung dar, bei welcher die Aktoren 10 und 22 ebenfalls als Zylinder-Kolben-Einheiten ausgeführt sind. Die Aktoren 10 und 22 sind bei der Ausführung der Vorrichtung 2 gemäß Fig. 3 jedoch drehfest gegenüber der Welle 3 ausgeführt, so dass im Bereich zwischen den Betätigungselementen 37 und 38 und den Bolzen 14A und 14B sowie den Bolzen 39A und 39B über vorliegend als Gleitlager ausgeführte Lagereinrichtungen 41 und 42 eine Drehzahlabkopplung zwischen den ebenfalls drehfest gegenüber der Welle 3 ausgeführten Kolbenstangen 35 und 36 der Zuschalteinrichtungen 8 und 9 und den Bolzen 14A, 14B bzw. 39A und 39B vorgesehen ist.

Alternativ hierzu sind die Lagereinrichtungen auch als Wälzlager ausführbar, um eine möglichst reibungsarme Relativbewegung zwischen den im Betrieb der Getriebeeinrichtung mit der Drehzahl der Welle 3 rotierenden Bolzen und den Betätigungselementen der Zuschalteinrichtungen der Vorrichtung 2 vorsehen zu können.

Die Aktoren 10 und 22 sind jeweils ausgehend von den Wellenenden der Welle 3 in das Innere der Welle 3 eingeschoben und drehfest mit einem Gehäuse 43 der Getriebeeinrichtung 1 verbunden, wobei die Verbindung zur Hydraulikpumpe 25 ohne den in Fig. 1 und Fig. 2 dargestellten Drehübertrager 24 durch das Gehäuse 43 der Getriebeeinrichtung 1 direkt zu den Kolbenräumen 33A, 33B und 34A, 34B auf konstruktiv einfache Art und Weise vorgesehen ist. In Fig. 3 nicht näher dargestellte Regelventile zum bedarfsweisen Beaufschlagen der Kolbenräume 33A bis 34B sind in Abhängigkeit des jeweils vorliegenden Anwendungsfalles innerhalb der Welle 3 oder außerhalb der Welle anordenbar.

Zur Erhöhung der Aktorsteifigkeit besteht bei einer in der Zeichnung nicht näher dargestellten Weiterbildung der in Fig. 3 gezeigten Ausführungsform der erfindungsgemäßen Vorrichtung die Möglichkeit, die Aktoren im Bereich ihrer in das Innere der Welle eingreifenden Enden in der Welle durch geeignete Lagereinrichtungen zu lagern und/oder die Aktoren als hydraulische Motoren auszuführen.

Bei letztgenannter Ausführungsform ist der rotatorische Antrieb der hydraulischen Motoren in der in Fig. 1 dargestellten Art und Weise beispielsweise über Spindel-Mutter-Anordnungen in eine translatorische Betätigungsbewegung zum Zu- oder Abschalten der auf der Welle angeordneten Losräder umzuwandeln.

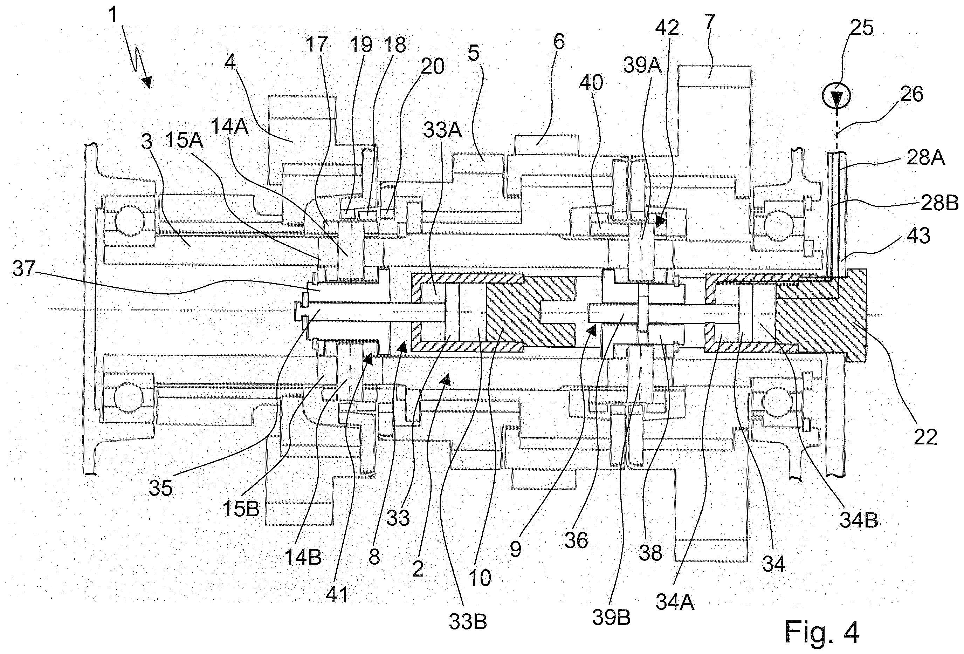

Bei der in Fig. 4 dargestellten vierten Ausführungsform nicht erfindungsgemäßen Vorrichtung 2, welche sich von der in Fig. 3 dargestellten Ausführungsform lediglich in der Anordnung der Aktoren 10 und 22 unterscheidet, sind die beiden Aktoren 10 und 22 im Bereich ihrer Gehäuse verbunden, so dass nur eine einseitige Verbindung zum Getriebegehäuse 43 notwendig ist. Beide Aktoren 10 und 22 werden auch über die Seite des Getriebegehäuses 43 von der Pumpe 25 mit Drucköl versorgt, mit der diese drehfest verbunden sind, wobei die Verbindungsleitungen des Aktors 10 vorliegend nicht in der dargestellten Schnittebene liegen und deshalb in Fig. 4 nicht näher dargestellt sind.

Um die translatorische Betätigungsbewegung des Aktors 10 aus dem Inneren der Welle 3 nach außen führen zu können, weist die Verbindung zwischen den Aktoren 10 und 22 einen so genannten Freigang auf, durch den das Betätigungselement 37 der Zuschalteinrichtung 8, in das die Drehzahlentkopplung integriert ist, mit den Bolzen 14A und 14B verbunden werden kann.

Auf diese Art und Weise besteht die Möglichkeit, auch mehr als zwei miteinander verbundene Aktoren im Inneren der Welle 3 anzuordnen und zum Betätigen von mehr als vier auf einer Vorgelegewelle oder dergleichen angeordneten Losrädern vorzusehen.

Grundsätzlich ist die erfindungsgemäße Vorrichtung durch eine kompakte und leichte Bauweise sowie durch einen geringen Bauraumbedarf gekennzeichnet. Darüber hinaus sind auf einer Getriebewelle angeordnete Losräder mit geringen Reibungsverlusten von einem zugeschalteten in einen abgeschalteten bzw. von einem abgeschalteten in einen zugeschalteten Betriebszustand überführbar, wobei zur Ansteuerung der Aktoren das Hydraulikfluid eines Hydrauliksystems der Getriebeeinrichtung oder ein Hydraulikfluid eines separaten Ölkreislaufes verwendbar ist.

Darüber hinaus besteht auch die Möglichkeit, die Aktoren als pneumatische Motoren oder Stellzylinder auszuführen und die zur Steuerung und/oder Regelung der Aktoren vorgesehenen Regelventile als mechanische, elektrische, magnetische oder hydraulische Ventileinrichtungen auszuführen.

Insbesondere bei der gehäusefesten Ausführung der Aktoren ist die Vorrichtung nach der Erfindung auf einfache Art und Weise mit einer dichten, separaten sowie wirkungsgradoptimierten Hochdruckhydraulik für die Betätigung der auf die Welle angeordneten Losräder ausführbar, da keine Drehölübertragung erforderlich ist.

Bei einer weiteren vorteilhaften und in der Zeichnung nicht näher dargestellten Ausführungsform der erfindungsgemäßen Vorrichtung ist diese lediglich mit einem Aktor zum Aufbringen der Betätigungskraft zum Zu- bzw. Abschalten mehrerer auf einer Welle drehbar angeordneten Zahnräder ausgeführt, dem ein so genannter Auswählaktor zugeordnet ist. Mittels des Auswählaktors ist zwischen den verschiedenen zu betätigenden Losrädern der Getriebeeinrichtung eine Auswahl durchführbar, so dass das über den Auswählaktor ausgewählte Zahnrad bzw. das diesem zugeordnete Schaltelement mit der von dem Aktor erzeugten Betätigungsenergie beaufschlagt wird, während die anderen Zahnräder nicht vom Aktor betätigt werden.

Dabei ist der Auswählaktor vorzugsweise als Schaltmagnet, als hydraulisch betätigbare Kupplung oder dergleichen ausführbar, der zwischen mit einem fluidischen Druckmittel beaufschlagbaren Aktor der Vorrichtung und dem über die Vorrichtung zu betätigenden Losrad jeweils eine für die Betätigung des Losrades bzw. diesem zugeordnetem Schaltelement erforderliche Verbindung herstellt.

### Bezugszeichen

- 1: Getriebeeinrichtung
- 2: Vorrichtung
- 3: Welle
- 4 bis 7: Zahnrad
- 8, 9: Zuschalteinrichtung
- 10: Aktor
- 11: Motorausgangswelle
- 12: Spindel
- 13: Spindel-Mutter-Anordnung
- 14A, B: Bolzen
- 15A, B: Langlöcher
- 16: Mutter
- 17: Hülsenelement
- 18 bis 20: Zahnprofil
- 21: Spindel-Mutter-Anordnung
- 22: Aktor
- 23: Mutter
- 24: Drehübertrager
- 25: Pumpe
- 26: hydraulische Leitung
- 27: Regelventil
- 28A, B: Verbindungsleitung
- 29A, B: Verbindungsleitung
- 30: Motorausgangswelle
- 31: Spindel
- 33: Kolben
- 33A, B: Kolbenraum
- 34: Kolben
- 34A, B: Kolbenraum
- 35, 36: Kolbenstange
- 37, 38: Betätigungselement
- 39A, B: Bolzen
- 40: Hülsenelement
- 41,42: Lagereinrichtung
- 43: Gehäuse

## Patentansprüche

1. Vorrichtung (2) zum Betätigen eines als Losrad ausgeführten Zahnrades (4 bis 7) einer Getriebeeinrichtung (1), welches Zahnrad (4 bis 7) auf einer Welle (3) drehbar gelagert und über wenigstens eine einen wenigstens teilweise im Inneren der Welle (3) angeordneten und über ein fluidisches Druckmittel betreibbaren Aktor (10, 22) aufweisende Zuschalteinrichtung (8, 9) in einen zugeschalteten Zustand überführbar ist, zu dem das Zahnrad (4 bis 7) mit der Welle (3) drehfest verbunden ist, und wobei das Zahnrad (4 bis 7) aus dem Inneren der Welle (3) heraus mit der zum Zu- oder Abschalten erforderlichen Betätigungskraft beaufschlagt wird, **dadurch gekennzeichnet, dass** der wenigstens eine Aktor (10, 22) als ein Motor ausgebildet ist, der mit der Welle (3) drehfest verbunden und in dieser angeordnet ist, wobei die Wirkverbindung zwischen einer Motorausgangswelle (11, 30) des Motors (10, 22) und des zu betätigenden Zahnrades (4 bis 7) mit einer Drehzahlabkopplung zwischen der Motorausgangswelle (11, 30) und der Welle (3) ausgeführt ist.

2. Vorrichtung nach einem der Ansprüche 1, **dadurch gekennzeichnet, dass** der Motor (10, 22) als hydraulischer oder pneumatischer Motor ausgebildet ist.

3. Vorrichtung nach Anspruch 1 oder 2, **dadurch gekennzeichnet, dass** die Zuschalteinrichtung (8, 9) zwischen dem Aktor (10, 22) und dem Zahnrad (4 bis 7) eine Antriebswandlereinrichtung (13, 21) aufweist, mittels welcher ein rotatorischer Antrieb des Aktors (10, 22) in eine translatorische Antriebsbewegung umwandelbar ist.

4. Vorrichtung nach Anspruch 3, **dadurch gekennzeichnet, dass** die Antriebswandlereinrichtung als eine Spindel-Mutter-Anordnung (13, 21) mit oder ohne Selbsthemmung ausgeführt ist.

5. Vorrichtung nach Anspruch 3 oder 4, **dadurch gekennzeichnet, dass** zwischen dem Aktor und der Antriebswandlereinrichtung ein Getriebe, vorzugsweise ein Planetengetriebe, angeordnet ist.

6. Vorrichtung nach einem der Ansprüche 1 oder 2 bis 5, **dadurch gekennzeichnet, dass** der Motor (10, 22) als Schwenkmotor ausgebildet ist, der in einer zu einem gegenüber der Welle (3) drehbaren Betriebszustand des Zahnrades (4 bis 7) äquivalenten Schwenklage verrastet.

7. Vorrichtung nach Anspruch 6, **dadurch gekennzeichnet, dass** der Schwenkmotor in mehreren Betriebszuständen des Zahnrades verrastet.

8. Vorrichtung nach einem der Ansprüche 2 bis 7, **dadurch gekennzeichnet, dass** die Drehzahlabkopplung als Gleitlagereinrichtung oder als Wälzlagereinrichtung ausgebildet ist.

9. Vorrichtung nach einem der Ansprüche 1 bis 8, **dadurch gekennzeichnet, dass** eine das Druckmittel verdichtende Pumpe in der Welle angeordnet ist.

10. Vorrichtung nach einem der Ansprüche 1 bis 9, **dadurch gekennzeichnet, dass** die Zuschalteinrichtung mehrere Aktoren aufweist, welche in einem Modul zusammengefasst sind.

11. Vorrichtung nach einem der Ansprüche 1 bis 10, **dadurch gekennzeichnet, dass** eine Ventileinrichtung (27) zum Beaufschlagen des Aktors (10, 22) mit Druckmittel drehfest mit der Welle (3) verbunden ist.

12. Vorrichtung nach einem der Ansprüche 1 bis 11, **dadurch gekennzeichnet, dass** eine Ventileinrichtung zum Beaufschlagen des Aktors mit Druckmittel gegenüber der Welle drehfest ausgeführt ist.

13. Vorrichtung nach einem der Ansprüche 1 bis 12, dadurch gekenn-zeichnet, dass der im Inneren der Welle angeordnete Teil des Aktors mit einem Ölkanal zum Führen von Hydraulikfluid ausgebildet ist.

14. Vorrichtung nach einem der Ansprüche 1 bis 13, **dadurch gekennzeichnet, dass** über den Aktor mehrere Zahnräder betätigbar sind, wobei die Wirkverbindungen zwischen dem Aktor und den Zahnrädern jeweils über einen Auswählaktor zu- und abschaltbar sind.

15. Vorrichtung nach einem der Ansprüche 1 bis 14, **dadurch gekennzeichnet, dass** der Aktor in der Welle gelagert ist.

## Claims

1. Device (2) for actuating a gearwheel (4 to 7), configured as a loose wheel, of a transmission device (1), which gearwheel (4 to 7) is rotatably mounted on a shaft (3) and can be transferred, via at least one activating device (8, 9) having an actuator (10, 22) which is at least partially arranged in the interior of the shaft (3) and can be operated by means of a fluid pressure medium, into an activated state in which the gearwheel (4 to 7) is connected to the shaft (3) in a rotationally fixed manner, and wherein the actuating force required for activation or deactivation is applied to the gearwheel (4 to 7) from the interior of the shaft (3), **characterized in that** the at least one actuator (10, 22) is designed as a motor which is connected to the shaft (3) in a rotationally fixed manner and is arranged therein, wherein the operative connection between a motor output shaft (11, 30) of the motor (10, 22) and the gearwheel (4 to 7) to be actuated is configured with a rotational speed decoupling between the motor output shaft (11, 30) and the shaft (3).

2. Device according to Claim 1, **characterized in that** the motor (10, 22) is designed as a hydraulic or pneumatic motor.

3. Device according to Claim 1 or 2, **characterized in that** the activating device (8, 9) has, between the actuator (10, 22) and the gearwheel (4 to 7), a drive converter device (13, 21) by means of which a rotational drive of the actuator (10, 22) can be converted into a translational drive movement.

4. Device according to Claim 3, **characterized in that** the drive converter device is configured as a spindle-nut arrangement (13, 21) with or without self-locking.

5. Device according to Claim 3 or 4, **characterized in that** a gear mechanism, preferably a planetary gear mechanism, is arranged between the actuator and the drive converter device.

6. Device according to one of Claims 1 or 2 to 5, **characterized in that** the motor (10, 22) is designed as a pivoting motor which latches in a pivoting position equivalent to an operating state of the gearwheel (4 to 7) in which it can be rotated with respect to the shaft (3) .

7. Device according to Claim 6, **characterized in that** the pivoting motor latches in a plurality of operating states of the gearwheel.

8. Device according to one of Claims 2 to 7, **characterized in that** the rotational speed decoupling takes the form of a sliding bearing device or of a rolling bearing device.

9. Device according to one of Claims 1 to 8, **characterized in that** a pump which compresses the pressure medium is arranged in the shaft.

10. Device according to one of Claims 1 to 9, **characterized in that** the activating device has a plurality of actuators which are combined in a module.

11. Device according to one of Claims 1 to 10, **characterized in that** a valve device (27) for applying pressure medium to the actuator (10, 22) is connected to the shaft (3) in a rotationally fixed manner.

12. Device according to one of Claims 1 to 11, **characterized in that** a valve device for applying pressure medium to the actuator is designed to be rotationally fixed with respect to the shaft.

13. Device according to one of Claims 1 to 12, **characterized in that** the part of the actuator arranged in the interior of the shaft is designed with an oil duct for conducting hydraulic fluid.

14. Device according to one of Claims 1 to 13, **characterized in that** a plurality of gearwheels can be actuated via the actuator, wherein the operative connections between the actuator and the gearwheels can each be activated and deactivated via a selection actuator.

15. Device according to one of Claims 1 to 14, **characterized in that** the actuator is mounted in the shaft.

## Revendications

1. Dispositif (2) pour l'actionnement d'une roue dentée (4 à 7), réalisée sous forme de roue libre, d'un dispositif de transmission (1), la roue dentée (4 à 7) étant supportée à rotation sur un arbre (3) et, par le biais d'au moins un dispositif d'enclenchement (8, 9) présentant un actionneur (10, 22) disposé au moins en partie à l'intérieur de l'arbre (3) et pouvant être actionné par le biais d'un milieu fluidique sous pression, pouvant être transférée dans un état enclenché auquel la roue dentée (4 à 7) est connectée de manière solidaire en rotation à l'arbre, et la roue dentée (4 à 7) étant sollicitée hors de l'intérieur de l'arbre (3) avec la force d'actionnement nécessaire pour l'enclenchement ou le désenclenchement, **caractérisé en ce que** l'au moins un actionneur (10, 22) est réalisé sous forme de moteur qui est connecté de manière solidaire en rotation à l'arbre (3) et qui est disposé dans celui-ci, la liaison fonctionnelle entre un arbre de sortie de moteur (11, 30) du moteur (10, 22) et de la roue dentée (4 à 7) à actionner étant réalisée avec un désaccouplement de vitesse de rotation entre l'arbre de sortie de moteur (11, 30) et l'arbre (3).

2. Dispositif selon l'une quelconque des revendications 1, **caractérisé en ce que** le moteur (10, 22) est réalisé sous forme de moteur hydraulique ou pneumatique.

3. Dispositif selon la revendication 1 ou 2, **caractérisé en ce que** le dispositif d'enclenchement (8, 9) présente, entre l'actionneur (10, 22) et la roue dentée (4 à 7), un dispositif de convertisseur d'entraînement (13, 21) au moyen duquel un entraînement en rotation de l'actionneur (10, 22) peut être converti en un mouvement d'entraînement de translation.

4. Dispositif selon la revendication 3, **caractérisé en ce que** le dispositif de convertisseur d'entraînement est réalisé sous forme d'agencement de broche et d'écrou (13, 21) avec ou sans auto-blocage.

5. Dispositif selon la revendication 3 ou 4, **caractérisé en ce qu'**entre l'actionneur et le dispositif de convertisseur d'entraînement est disposée une transmission, de préférence une transmission planétaire.

6. Dispositif selon l'une quelconque des revendications 1 ou 2 à 5, **caractérisé en ce que** le moteur (10, 22) est réalisé sous forme de moteur pivotant qui s'encliquète dans une position de pivotement équivalant à un état de fonctionnement de la roue dentée (4 à 7) en rotation par rapport à l'arbre (3).

7. Dispositif selon la revendication 6, **caractérisé en ce que** le moteur pivotant s'encliquète dans plusieurs états de fonctionnement de la roue dentée.

8. Dispositif selon l'une quelconque des revendications 2 à 7, **caractérisé en ce que** le désaccouplement de vitesse de rotation est réalisé sous forme de dispositif de palier lisse ou sous forme de dispositif de palier à roulement.

9. Dispositif selon l'une quelconque des revendications 1 à 8, **caractérisé en ce qu'**une pompe comprimant le milieu sous pression est disposée dans l'arbre.

10. Dispositif selon l'une quelconque des revendications 1 à 9, **caractérisé en ce que** le dispositif d'enclenchement présente plusieurs actionneurs qui sont réunis dans un module.

11. Dispositif selon l'une quelconque des revendications 1 à 10, **caractérisé en ce qu'**un dispositif de soupape (27) pour solliciter l'actionneur (10, 22) avec un milieu sous pression est connecté de manière solidaire en rotation à l'arbre (3).

12. Dispositif selon l'une quelconque des revendications 1 à 11, **caractérisé en ce qu'**un dispositif de soupape pour solliciter l'actionneur avec un milieu sous pression est réalisé de manière solidaire en rotation par rapport à l'arbre.

13. Dispositif selon l'une quelconque des revendications 1 à 12, **caractérisé en ce que** la partie de l'actionneur disposée à l'intérieur de l'arbre est réalisée avec un canal d'huile pour le guidage de fluide hydraulique.

14. Dispositif selon l'une quelconque des revendications 1 à 13, **caractérisé en ce que** plusieurs roues dentées peuvent être actionnées par le biais de l'actionneur, les liaisons fonctionnelles entre l'actionneur et les roues dentées pouvant être enclenchées et désenclenchées respectivement par le biais d'un actionneur de sélection.

15. Dispositif selon l'une quelconque des revendications 1 à 14, **caractérisé en ce que** l'actionneur est supporté dans l'arbre.
